# EUROPÄISCHE PATENTANMELDUNG

(11) **EP 4 675 373 A2**
(43) Veröffentlichungstag der Anmeldung: **07.01.2026**
(21) Anmeldenummer: 25187409.5
(22) Anmeldetag: 03.07.2025
(51) Int. Cl.: G03H 1/00, G03H 1/04, G03H 1/20, G03H 1/02, G03H 1/08, G03H 1/22

(54) **VERBORGENES INDIVIDUALISIERTES HOLOGRAMMSICHERHEITSELEMENT SOWIE VERFAHREN UND VORRICHTUNG ZUM VERIFIZIEREN**

(30) Priorität: 03.07.2024 DE 102024118911
(71) Anmelder: Bundesdruckerei GmbH, 10969 Berlin (DE)
(72) Erfinder: Tries, Alexander, 10553 Berlin (DE); Kunath, Christian, 12203 Berlin (DE); Gahlbeck, Jeffry, 15517 Fürstenwalde (DE); Sprenger, Martin, 10317 Berlin (DE); Klünder, Kathrin, 10179 Berlin (DE)
(74) Vertreter: Obst, Bernhard

(57) **Zusammenfassung**

Verborgenes individualisiertes Hologrammsicherheitselement sowie Verfahren und Vorrichtung zum Verifizieren

Die Erfindung betrifft ein Verfahren (1000) zum Herstellen eines Hologrammsicherheitselements (2000) umfassend die Schritte:
Erfassen (1010) einer Bildinformation;
Errechnen (1020) eines Phasenbilds, das mit der Bildinformation im Fernfeld korrespondiert;
Falten (1030) des Phasenbilds mit der Abbildungsfunktion mindestens eines optischen Elements, um die Bildinformation des Fernfelds eine anderen Wiedergabeposition zuzuweisen;
Anordnen eines holografischen Aufzeichnungsmaterials vor einem reflektierenden räumlichen Phasenmodulator, sodass eine Seite des holografischen Aufzeichnungsmaterials dem räumlichen Phasenmodulator zugewandt ist,
Belichten des Aufzeichnungsmaterials mit kohärentem Licht (52) von der dem räumlichen Phasenmodulator abgewandten Seite, so dass das kohärente von der dem räumlichen Phasenmodulator abgewandten Seite eingestrahlte Licht in dem holografischen Aufzeichnungsmaterial mit dem hinsichtlich der Phase modulierten von dem reflektierenden räumlichen Phasenmodulator reflektierten Licht interferiert, um ein Hologramm in dem Aufzeichnungsmaterial zu speichern (1100). Die Erfindung betrifft ferner eine Herstellungsvorrichtung ein Verifikationsverfahren und eine Verifikationsvorrichtung.

## Beschreibung

Die Erfindung betrifft ein als Hologramm ausgebildetes Sicherheitselement, welches eine grafische Information speichert, die vorzugsweise individuell für das einzelne Sicherheitselement einer Serie von gleichartigen Sicherheitselementen ist. Insbesondere betrifft die Erfindung ein Hologrammsicherheitselement, welches ein Beugungselement umfasst, welches insbesondere geeignet ist, maschinell ausgelesen zu werden, sodass anhand der erfassten Beugung eine Verifikation eines mit dem Sicherheitselement versehenen Sicherheitsdokuments oder ähnlichen Gegenstands möglich ist. Die Erfindung betrifft ferner ein Verifikationsverfahren und eine Verifikationsvorrichtung zum Verifizieren für ein solches Hologrammsicherheitselement.

Aus dem Stand der Technik ist es bekannt, Gegenstände, insbesondere Dokumente und Datenträger wie beispielsweise Ausweise, Führerscheine, Identifikationskarten, aber auch wertbehaftete Gegenstände wie Eintrittskarten, Verpackungen oder Ähnliches mit sogenannten Sicherheitselementen zu versehen, die mindestens ein Merkmal aufweisen, anhand dessen eine Echtheit des jeweiligen Gegenstands und/oder eine Fälschung oder Verfälschung, unautorisierte Duplizierung oder Ähnliches erkannt werden kann. Ein solches Merkmal wird als Sicherheitsmerkmal bezeichnet. Ein körperlicher Gegenstand mit einem Sicherheitsmerkmal wird hier als Sicherheitselement bezeichnet.

Eine Gruppe von Sicherheitselementen ist für eine optische Verifikation vorgesehen. Bei einer optischen Verifikation werden entweder durch einen menschlichen Betrachter oder über ein Erfassen einer Abbildung Eigenschaften und/oder gespeicherte Informationen überprüft oder optische Effekte auf ihr Vorhandensein und/oder ihre Ausgestaltung hin überprüft und/oder ausgewertet.

Eine Gruppe von Sicherheitselementen umfasst Beugungselemente. Ein Beugungselement weist mindestens eine Beugungsstruktur auf, welche in der Lage ist, Licht aufgrund des physikalischen Effekts der Beugung zu beeinflussen. Zu den weit verbreiteten Beugungselementen gehören insbesondere Hologramme, aber auch Kinegramme, andere geprägte Oberflächenstrukturen oder Ähnliches.

Sehr weit verbreitet sind beispielsweise geprägte Oberflächenhologramme, bei denen eine in die Oberfläche geprägte Beugungsstruktur, sofern diese beispielsweise mit einer Metallschicht versehen ist oder mit einer transparenten Schicht mit hohem Brechungsindex überdeckt ist, Licht an der strukturierten Grenzfläche reflektierend beugt. Die geprägten Oberflächenhologramme gehören zu der Gruppe der sogenannten dünnen Hologramme. Solche Hologramme sind beispielsweise zur Absicherung von Kreditkarten und Bankkarten weit verbreitet. Diese Art von Hologrammen lässt sich in einer Massenproduktion nicht gut individualisieren.

Eine weitere Gruppe von Hologrammen umfasst Volumenhologramme, bei denen die Beugungsstruktur im Volumen eines Materials gespeichert ist. Solche Hologramme werden in Abgrenzung zu den Oberflächenhologrammen, welche dünne Hologramme sind, als dicke Hologramme bezeichnet.

Eine spezielle Ausprägung eines Volumenreflexionshologramms, wie es beispielsweise in Ausweisen verwendet wird, sowie dessen Herstellung sind in der Druckschrift EP 0 896 260 A2 beschrieben.

Die in der EP 0 896 260 A2 beschriebenen Volumenhologramme werden beispielsweise in deutschen Ausweisen eingesetzt, um eine Bildinformation eines Portraitbilds, welches farbig auf eine Substratschicht eines Sicherheitsdokuments aufgedruckt wird, zusätzlich als Schwarz/Weiß- bzw. Graustufenbild in einem überlagerten und seitlich versetzten Hologramm zu speichern. Hierfür wird beispielsweise ein Masterhologramm einer homogenen Streuscheibe, die senkrecht einfallendes monochromatisches, beispielsweise grünes, Licht unter einem 45°-Winkel beugt, mit Bildinformationen des Portraitbilds lokal mit unterschiedlichen Intensitäten in das Hologramm um kopiert. Hierdurch entsteht das im Umgebungslicht rekonstruierende, eine grüne Farbe aufweisende "Schwarz/Weiß- oder Graustufenportraitbild". Dieses ist für eine Verifikation durch einen menschlichen Betrachter geeignet.

Zusätzlich sind in derselben Hologrammschicht in einem deutschen Ausweisdokument weitere Beugungsstrukturen, wie beispielsweise kinegrafische Strukturen oder ein parallaxebehaftetes Hologramm eines Adlers gespeichert. Letzteres ist beispielsweise mit rotem kohärentem Licht in das Hologramm gespeichert. Zusätzlich weist das unter der Marke Identigramm verwendete Hologramm in deutschen Ausweisen noch ein nicht individualisiertes maschinenlesbares Merkmal auf, welches ein vorgegebenes einfach zu verifizierendes Lichtfeld bei Einstrahlung von kohärentem Licht unter einer vorgegebenen Belichtungsrichtung rekonstruiert.

Der Erfindung liegt die Aufgabe zugrunde, ein Verfahren und eine Vorrichtung zur Herstellung eines verbesserten Hologrammsicherheitselements zu schaffen, welches insbesondere für eine maschinelle Prüfung geeignet ist, schwer zu fälschen ist und eine verbesserte Absicherung des Sicherheitsdokuments und der darin gespeicherten persönlichen oder individuellen Informationen ermöglicht, die zu der Person zugeordnet sind, der auch ein entsprechender mit dem Sicherheitselement gesicherter Gegenstand, z.B. ein Sicherheitsdokument, zugeordnet ist, sowie eine Vorrichtung und ein Verfahren zum zuverlässigen Verifizieren eines solchen Hologrammsicherheitselements.

Die Erfindung wird durch ein Verfahren zum Herstellen eines solchen Hologrammsicherheitselements mit den Merkmalen des Patentanspruchs 1, eine Vorrichtung zum Erzeugen eines Hologrammsicherheitselements mit den Merkmalen des Patentanspruchs 8 sowie ein Verfahren zum Verifizieren eines solchen Hologrammsicherheitselements mit den Merkmalen des Patentanspruchs 10 sowie eine Verifikationsvorrichtung mit den Merkmalen des Anspruchs 12 geschaffen. Vorteilhafte Ausführungsformen ergeben sich aus den Unteransprüchen.

Der Erfindung liegt die Idee zugrunde, ein individualisiertes Hologramm herzustellen, welches mittels Einstrahlung kohärenten Lichts ähnlich wie das derzeitige maschinenprüfbare Merkmal ein Beugungsbild projiziert. Um dieses in einem Volumenhologramm zu erreichen und dieses dennoch auf einfache Weise ausbilden zu können, sodass für jedes der hergestellten Hologrammsicherheitselemente ein individualisiertes Beugungsbild erzeugt wird, ist vorgesehen, als Beugungsmuster ein computergeneriertes Phasenhologramm in eine Hologrammschicht zu speichern. Dieses erfolgt vorzugsweise ebenfalls in einer Belichtungsgeometrie, die einem Denisjuk-Reflexionshologramm ähnelt oder gleicht. Hierbei ist eine Einstrahlung von kohärentem Licht durch das Aufzeichnungsmaterial auf ein reflektierendes Masterobjekt ausreichend, welches das Licht reflektiert oder beugend reflektiert, sodass das reflektierte Licht mit dem das Aufzeichnungsmaterial durchstrahlenden, noch nicht gebeugten Licht interferiert und eine holografische Interferenzstruktur speichert. Während bei den oben beschriebenen Volumenreflexionshologrammen nach dem Stand der Technik unter dem holografischen Aufzeichnungsmaterial in Kontakt mit diesem ein Hologrammmaster angeordnet ist, der eine homogene Streuscheibe rekonstruiert, die aufgrund einer räumlichen Amplitudenmodulation des einfallenden Lichts lokal mit unterschiedlichen Beugungseffizienzen rekonstruiert und somit mit unterschiedlichen Beugungseffizienzen in das fertige, individualisierte Volumenhologramm des Aufzeichnungsmaterials kopiert wird, ist bei dem neuartigen Sicherheitselement vorgesehen, dass das durch das Aufzeichnungsmaterial hindurchtretende und noch nicht modulierte kohärente Licht von einem reflektierenden phasenmodulierenden räumlichen Lichtmodulator räumlich hinsichtlich der Phasenlagen moduliert und reflektiert wird. Anders als bei der Erzeugung der Portraitbilder im Stand der Technik wird somit nicht eine Lichtintensität in einem räumlichen Lichtmodulator bei der Erzeugung örtlich moduliert, sondern eine Modulation einer Phase des für die Hologrammbelichtung erzeugten Objektlichts herbeigeführt. Unterhalb und benachbart zu dem holografischen Aufzeichnungsmaterial wird somit ein phasenmodulierender räumlicher Lichtmodulator angeordnet. Ein entsprechend berechnetes Phasenhologramm wird genutzt, um den reflektierenden phasenmodulierenden räumlichen Lichtmodulator zu steuern. Das hiervon reflektierte Licht wird als Objektlicht für die Erzeugung eines Volumenreflexionshologramms verwendet.

Es ist bekannt, dass bei einer Rekonstruktion eines so gespeicherten berechneten Phasenhologramms einem Lichtfeld, das eine ebene Welle repräsentiert, lokal die Phasenlagen des Hologramms aufgeprägt werden. Im Fernfeld wird von diesem Licht dann eine Information projiziert, die eine Fouriertransformierte der Phaseninformation des Phasenhologramms darstellt. Gibt man somit die gewünschte zu rekonstruierende Bildinformation vor, so kann hieraus ein entsprechendes Phasenbild errechnet werden, welches holografisch gespeichert werden kann, um bei der Rekonstruktion die gewünschte Information im Fernfeld zu erhalten. Auf kleinem Raum kann hierdurch eine hohe Informationsdichte für eine maschinelle Auswertung gespeichert werden.

Um jedoch die Rekonstruktionsebene der Bildinformation vorzugeben, ist vorgesehen, dass das mit der Bildinformation im Fernfeld korrespondierende Phasenbild mit einer Abbildungsfunktion mindestens eines optischen Elements gefaltet wird, um ein modifiziertes Phasenbild zu erhalten, welches als computergeneriertes Phasenhologramm in das Aufzeichnungsmaterial belichtet wird.

Das so erhaltene Hologramm rekonstruiert nur mit kohärentem Licht, so dass es nicht für eine Verifikation durch einen Menschen geeignet ist, sondern vielmehr für eine maschinelle Verifikation geeignet ist.

### Definitionen

Ein Hologrammsicherheitselement ist ein Sicherheitselement, welches ein Hologramm umfasst.

Als Hologramm wird eine gespeicherte Beugungsstruktur bezeichnet, die mit kohärentem Licht rekonstruierbar ist. Die Beugungsstruktur ist durch eine Interferenz zweier kohärenter Lichtfelder erzeugbar. Die in dem gebeugten Licht bei der Rekonstruktion enthaltene Information wird auch als die im Hologramm gespeicherte Information bezeichnet. Das sich bei einer Rekonstruktion ergebende Lichtfeld enthält somit diese Information und kann bei der Rekonstruktion erfasst werden. Das sich ergebende Lichtfeld wird auch als rekonstruiertes Hologramm bezeichnet.

Als Volumenhologramm wird ein Hologramm bezeichnet, bei dem die gespeicherte Information in einem größeren Volumenbereich gespeichert wird. Hiervon abzugrenzen sind sogenannte dünne Hologramme, bei denen die Information im Wesentlichen in einer Ebene gespeichert wird.

Als Phasenbild werden die räumlich verteilten, unterschiedlichen Phasenlagen eines Lichtfelds bezeichnet, das bei seiner Ausbreitung im Fernfeld eine grafische Bildinformation projiziert. Diese Bildinformation wird als Bildinformation des Phasenbilds aufgefasst.

Als modifiziertes Phasenbild wird die Information der räumlich verteilten unterschiedlichen Phasenlagen eines kohärenten Lichtfelds bezeichnet, das sich aus der Faltung eines Phasenbilds mit einer Abbildungsfunktion mindestens eines optischen Elements ergibt.

Eine Abbildungsfunktion mindestens eines optischen Elements ist die Funktion, die eine optische Abbildung eines Phasenbilds durch das entsprechende optische Element beschreibt. Faltet man diese Abbildungsfunktion mit der des Phasenbilds, so erhält man ein modifiziertes Phasenbild. Die Faltung des Phasenbildes mit der Abbildungsfunktion führt dazu, dass ein mit dem modifizierten Phasenbild hinsichtlich der Phasenlagen moduliertes kohärentes Lichtfeld die mit dem Phasenbild verknüpfte Bildinformation nicht im Fernfeld, sondern an einer anderen Position im Raum wiedergibt. Diese Abbildungsebene wird durch das mindestens eine optische Element oder dessen Abbildungsfunktion festgelegt. Da diese Ebene bei der Rekonstruktion auftritt, wird diese auch Rekonstruktionsebene genannt.

Als Phasenhologramm wird die Information der räumlich verteilten, unterschiedlichen Phasenlagen kohärenten Lichts bezeichnet, die das Objektlicht für eine holografische Aufzeichnung eines Hologramms definieren. Wird eine gemäß dem Phasenhologramm, d.h. gemäß den darin festgelegten Phasenlagen, moduliertes kohärentes Lichtfeld in ein holografisches Aufzeichnungsmaterial mit Referenzlicht, das die Struktur einer ebenen Welle aufweist, als Hologramm belichtet, so gleicht das während der Rekonstruktion bei der Beugung an dem Hologramm erzeugte Lichtfeld dem durch das Phasenhologramm festgelegten Lichtfeld. Hierbei wird angenommen, dass das modulierte Lichtfeld, welches als Objektlicht dient, räumlich nahe zu dem Ort der Modulation in ein holografisches Aufzeichnungsmaterial belichtet ist, d.h. mit dem Referenzlicht im holografischen Aufzeichnungsmaterial zu Interferenz gebracht ist.

Das Phasenbild und das Phasenhologramm können identisch sein, wenn ein aus einer Bitmap als Bildinformation bestimmtes Phasenbild unmittelbar als Phasenhologramm verwendet wird. Wird ein so bestimmtes Phasenbild jedoch beispielsweise mit einer Abbildungsfunktion, beispielsweise einer abbildenden Linse gefaltet, so entspricht das Phasenhologramm dem modifizierten Phasenbild. In letzterem Fall unterscheiden sich eine im Fernfeld ergebende grafische Information von der Bildinformation des ursprünglichen Phasenbilds. Die sich im Fernfeld ergebene Projektion des Phasenhologramms unterscheidet sich, da die Faltung mit der Abbildungsfunktion die Projektion der Bildinformation des ursprünglichen Phasenbilds an eine andere Position im Raum "verschoben" hat.

Als grafische bildliche Information oder Bildinformation wird eine Information bezeichnet, die durch eine abbildende Erfassungseinrichtung erfassbar ist. Diese äußerst sich in unterschiedlichen Kontrasten oder Farben und ist beispielsweise, zumindest, wenn sie auf eine ebene Fläche projiziert ist, für einen menschlichen Betrachter erfassbar. Eine in einer Bitmap gespeicherte Information kann als Bildinformation aufgefasst werden, wobei jedem Bit ein Bildpunkt (Pixel) zugeordnet wird und beispielsweise einem Bit mit dem Wert Null ein dunkler Bildpunkt und einem Bit mit dem Wert Eins ein heller Bildpunkt zugeordnet wird. Das sich ergebende Muster der hellen Bildpunkte vor einem dunklen Hintergrund ist dann die bildliche grafische Repräsentation der Information der Bitmap.

Als sichtbarer Wellenlängenbereich wird der Wellenlängenbereich bezeichnet, der durch einen durchschnittlichen, nicht fehlsichtigen Menschen mit seinen Augen wahrnehmbar ist. In der Regel ist dies der Wellenlängenbereich zwischen 380 nm und 780 nm. Das sich zum langwelligen Bereich anschließende Spektrum wird als infraroter Wellenlängenbereich bezeichnet. Das sich im kurzwelligen Spektralbereich anschließende Licht wird als UV-Licht bezeichnet.

Als holografisches Aufzeichnungsmaterial wird fotoempfindliches Material bezeichnet, welches mit elektromagnetischer Strahlung beim Belichten einmalig verändert werden kann, um eine Interferenzstruktur eines Hologramms zu speichern, welche nach einer Entwicklung und gegebenenfalls Fixierung in dem holografischen Aufzeichnungsmaterial gespeichert ist. Als holografisches Aufzeichnungsmaterial eignen sich insbesondere Fotopolymere, welche in einer dünnen Filmschicht ausgebildet sind.

Als Phasenmodulator wird eine Einrichtung bezeichnet, welche eine Phase des Lichts modulieren kann.

Als phasenmodulierender räumlicher Lichtmodulator oder kurz als räumlicher Phasenmodulator wird eine Einrichtung bezeichnet, die lokal an unterschiedlichen Positionen Licht hinsichtlich seiner Phase unterschiedlich modulieren kann. Beispielsweise kann eine Flüssigkristallschicht, die unterschiedliche Flüssigkristallzellen aufweist, Licht in den einzelnen Zellen unterschiedlich modulieren, wenn die Flüssigkristalle in den einzelnen Zellen unterschiedlich orientiert und ausgerichtet sind. Als Belichtungsbereich wird ein Bereich einer Vorrichtung bezeichnet, in dem eine Belichtung eines holografischen Aufzeichnungsmaterials erfolgt.

Als Aufzeichnungsbereich wird der Bereich eines holografischen Aufzeichnungsmaterials bezeichnet, in den ein Hologramm belichtet wird. Ein holografisches Aufzeichnungsmaterial oder ein flächiger Abschnitt eines holografischen Aufzeichnungsmaterials kann mehrere nebeneinander angeordnete und disjunkte oder einander überlappende Aufzeichnungsbereiche aufweisen.

Eine Erfassungseinrichtung ist eine Vorrichtung, die in der Lage ist eine zweidimensionale Bildinformation zu erfassen.

Ein Erfassungselement ist die funktionelle Komponente die die bildliche sensorische Erfassung ausführt. Beispielsweise kann dieses ein CCD-Chip oder eine andere technische Einrichtung sein, die mit Licht wechselwirkt und dieses erfassen und vorzugsweise in elektrische Signale wandeln kann.

Ein Projektionselement ist eine körperliche Struktur, auf die eine Bildinformation, d.h. zumindest ein Teil einer Bildinformation projiziert werden kann, so dass zumindest der projizierte Teil der Bildinformation optisch, beispielsweise mittels einer Kamera erfassbar ist. Alternativ, kann das Projektionselement auch selbst ein körperlich ausgebildetes Erfassungselement sein, welches den Teil der projizierten Bildinformation unmittelbar erfasst. Es kann also beispielsweise als Schirm, insbesondere teiltransparenter Schirm, oder als CCD-Chip oder ähnliches ausgebildet sein.

### Bevorzugte Ausführungsformen

Insbesondere wird ein Verfahren zum Herstellen eines Hologrammsicherheitselements geschaffen, welches die Schritte umfasst:
Erfassen einer Bildinformation;
Errechnen eines Phasenbilds, das mit der Bildinformation im Fernfeld korrespondiert; Falten des Phasenbilds mit einer Abbildungsfunktion mindestens eines optischen Elements, um der Bildinformation des Fernfelds eine anderen Wiedergabeposition zuzuweisen;
Anordnen eines holografischen Aufzeichnungsmaterials vor einem reflektierenden räumlichen Phasenmodulator, sodass eine Seite des holografischen Aufzeichnungsmaterials dem räumlichen Phasenmodulator zugewandt ist;
Belichten des Aufzeichnungsmaterials mit kohärentem Licht von der dem räumlichen Phasenmodulator abgewandten Seite, sodass das kohärente von der dem räumlichen Phasenmodulator abgewandten Seite eingestrahlte Licht in dem holografischen Aufzeichnungsmaterial mit dem hinsichtlich der Phase modulierten von dem reflektierenden räumlichen Phasenmodulator reflektierten Licht interferiert, um ein Hologramm in dem Aufzeichnungsmaterial zu speichern.

Während für die Rekonstruktion eines Volumenreflexionshologramms, wie es im Stand der Technik zur Speicherung eines Portraitbilds genutzt wird, weißes Umgebungslicht ausreicht, um die Rekonstruktion zu bewirken, ist für die Rekonstruktion des Phasenhologramms kohärentes Licht der entsprechenden Wellenlänge erforderlich, die mit der Wellenlänge korreliert ist, mit der das Phasenhologramm erzeugt wurde. Diese kann leicht von der Erzeugungswellenlänge abweichen, sofern es zu Materialschrumpfungseffekten bei der Entwicklung und/oder Fixierung der holografischen Informationen in dem holografischen Aufzeichnungsmaterial kommt. Während das Vorhandensein des Sicherheitsmerkmals mit bloßem Auge erkennbar ist, ist dessen gespeicherter Inhalt für den Betrachter nicht erfassbar, kann jedoch durch Einstrahlen von kohärentem Licht geeigneter Wellenlänge in eine grafische Bildinformation an einer durch die bei der Berechnung verwendeten Abbildungsfunktion festgelegten Position rekonstruiert werden, die beispielsweise auf einfache Weise von einer ortsauflösenden Erfassungseinrichtung erfasst werden kann. Hierzu kann beispielsweise ein CCD-Chip oder auch eine gewöhnliche Kamera eingesetzt werden. Mittels bekannter Bilderkennungs- und Auswertungsalgorithmen können die bildlichen Informationen genutzt werden, um diese mit einer Vorgabe zu vergleichen. Abhängig von dem Vergleich wird eine Verifikationsentscheidung z.B. echt/nicht echt gefällt und ausgegeben.

Werden eine Vielzahl von Hologrammsicherheitselementen teilweise zeitgleich im Mehrfachnutzen oder in zeitlicher Abfolge hergestellt, so ist für jedes Sicherheitshologrammelement die in dem Hologramm gespeicherte Bildinformation vorzugsweise von den Bildinformationen der anderen Hologrammsicherheitselemente verschieden. Diese werden auch bei einem Mehrfachnutzen in unterschiedliche Aufzeichnungsbereiche belichtet. Dies bedeutet, dass die individuellen Bildinformationen voneinander paarweise verschieden sind. Bei der Herstellung wird somit eine Vielzahl unterschiedlicher Bildinformationen erfasst, die jeweils getrennt und individuell in ein entsprechendes Phasenbild bzw. modifiziertes Phasenbild umgerechnet werden.

Wie oben angegeben wird, um eine definierte Rekonstruktionsebene in einem gewünschten Abstand zu dem Hologramm erzeugen zu können, beim Errechnen des Phasenhologramms dasjenige Phasenbild, welches im Fernfeld die vorgegebene Bildinformation rekonstruiert, mit einer Abbildungsfunktion mindestens eines optischen Abbildungselements gefaltet, um die mit dem optischen Abbildungselement verknüpfte Abbildungseigenschaft mit der Fernfeldinformation zu verknüpfen. Wird beispielsweise eine Bessel-Linsen-Abbildungsfunktion zur Faltung verwendet, so kann eine Abbildung in einer vorgegebenen Ebene bei der Rekonstruktion erreicht werden, deren Abstand von dem Hologrammsicherheitselement mit der Brennweite f der Bessel-Linsen-Abbildungsfunktion korrespondiert. Auch in kurzen Entfernungen von dem erzeugten Hologrammsicherheitselement kann somit eine scharfe Rekonstruktion der Bildinformation in einer Ebene erreicht werden. Dieses ermöglicht, kompakte Verifikationsvorrichtungen zu erzeugen, die eine Projektionsebene in einem festen Abstand zu einer Anordnungsebene aufweisen, in der das zu verifizierende Hologrammsicherheitselement anzuordnen ist und mit kohärentem Licht bei der Verifikation beleuchtet wird. Der Abstand entspricht der Brennweite der Bessel-Linsen-Abbildungsfunktion, die bei der Herstellung und Errechnung des modifizierten Phasenbilds genutzt wurde. Da die Abbildungsoptik in das Phasenhologramm mit hineingerechnet ist, benötigt man nur einen ortsauflösenden Detektor, wie einen CCD-Chip, auf dem die Information ohne eine weitere Abbildungsoptik erfasst werden kann. Bei anderen Ausführungsformen können andere optische Abbildungselemente oder auch die Abbildungsfunktionen von mehreren optischen Abbildungselementen mit dem Phasenbild gefaltet werden, das zu der ursprünglich bereitgestellten Bildinformation als Fernfeldprojektion errechnet ist. Beispielsweise kann die Abbildungsfunktion einer Blazegitterstruktur verwendet werden, um eine Auslenkung der rekonstruierten Bildinformation gegenüber der Belichtungsrichtung, die vorzugsweise senkrecht zum Aufzeichnungsmaterial gewählt ist, zu erreichen.

Bei einer bevorzugten Ausführungsform wird somit die Belichtung mit dem kohärenten Licht senkrecht zur Auflagefläche des Aufzeichnungsmaterials vorgenommen.

Um eine schnelle und zügige Herstellung einer Vielzahl von Hologrammsicherheitselementen zu ermöglichen, wird es bevorzugt, dass das Aufzeichnungsmaterial während der Belichtung im physischen Kontakt mit einer Auflagefläche gehalten wird. Hierdurch können Schwingungen und mechanische Bewegungen des Aufzeichnungsmaterials während der Belichtung zuverlässig vermieden werden. Darüber hinaus können die aufgrund des Transports unweigerlich auftretenden Materialbewegungen durch das Inkontaktbringen mit einer Auflagefläche sehr schnell gedämpft werden.

Um insbesondere eine räumliche Trennung von einer Belichtungsvorrichtung und einer Erfassungseinrichtung oder Projektionsfläche zu erreichen, ist bei einer Ausführungsform vorgesehen, dass der räumliche Phasenmodulator das Licht leicht verkippt gegenüber einer Oberflächennormale des holografischen Aufzeichnungsmaterials reflektiert. Vorzugsweise ist der räumliche Phasenmodulator somit leicht gegenüber der Auflagefläche des holografischen Aufzeichnungsmaterials verkippt, welches vorzugsweise senkrecht belichtet wird. Die leichte Verkippung bietet darüber hinaus den Vorteil, dass mögliche Interferenzen aufgrund von Mehrfachreflexionen an zueinander planparallelen Oberflächen vermieden werden, die zu unerwünschten Interferenzen und Auslöschungen von Licht führen können. Ferner wird hierdurch eine direkte Rückreflexion der 0. Ordnung des Lichtstrahls vermieden.

Die bereitgestellte Bildinformation wird vorzugsweise als Bitmap bereitgestellt oder in eine solche Bitmap überführt.

Das Phasenbild wird aus der bereitgestellten Bildinformation vorzugsweise in einem iterativen Fouiertransformationsprozess bestimmt. Dem Fachmann sind verschiedene solcher Verfahren bekannt, wie man iterativ zu einer Bildinformation die zugehörige ortsaufgelöste Phaseninformation, das Phasenbild, errechnen kann.

Bei einer bevorzugten Ausführungsform wird die Phaseninformation bzw. das Phasenbild mittels eines Gerchberg-Saxton-Algorithmus errechnet.

Die räumliche Phasenmodulation wird vorzugsweise mit einem reflektierenden LCOS durchgeführt. Das Akronym LCOS steht hierbei für Liquid Crystal on Silicon. Diese Technologie ist wohl erprobt und liefert einen räumlichen Phasenmodulator, der das Licht bei der Modulation der Phasenlage zusätzlich reflektiert.

Es wird somit ein Hologrammsicherheitselement geschaffen, welches ein gut maschinell zu verifizierendes Sicherheitselement darstellt. Besonders bevorzugt wird, dieses ein Phasenhologramm umfassendes holografische Sicherheitselement zusätzlich mit einem gewöhnlichen Volumenreflexionshologramm zu kombinieren, insbesondere einem individualisierten Volumenreflexionshologramm, das eine lokal mit unterschiedlichen Intensitäten gespeicherte holografische Mattscheibe oder Streuscheibe enthält. Eine so kopierte Streuscheibe oder Mattscheibe weist beispielsweise die Gestalt eines Portraitbilds einer Person als "Schwarz/Weiß-Bild" auf.

Besonders bevorzugt ergänzt sich die Bildinformation, die in dem Phasenhologramm gespeichert ist, mit der Bildinformation, die in dem gewöhnlichen Volumenreflexionshologramm gespeichert ist. Beispielsweise können dieselben alphanumerischen Zeichen oder auch dasselbe Portraitbild einmal als gewöhnliches Volumenreflexionshologramm und einmal als Reflexionsphasenhologramm gespeichert sein.

Aufgrund der Tatsache, dass die Belichtung wie bei einem gewöhnlichen Denisjuk-Reflexionshologramm erfolgt, wird das von dem räumlichen Phasenmodulator erzeugte Lichtfeld eines Phasenbilds im Volumenhologramm als Reflexionshologramm gespeichert. Dieses ermöglicht die Rekonstruktion als Reflexionshologramm. Darüber hinaus ist gegenüber sonstigen Phasenhologrammen, die häufig an der Oberfläche als Relief oder Ähnliches gespeichert sind, die Hologramminformation im Volumen des Aufzeichnungsmaterials gespeichert, was einen besseren Schutz gegenüber Manipulationen gewährleistet. Außerdem kann mit dem Volumenhologramm eine hohe Beugungseffizienz erreicht werden, was den Nachweis der Rekonstruktion erleichtert. Die Information ist im Innern des Hologramms im Volumen des holografischen Aufzeichnungsmaterials gespeichert. Beim Verifizieren können somit zum einen die Bildinformation des Phasenhologramms als auch das gewöhnliche Volumenreflexionshologramm rekonstruiert werden und die darin enthaltenen Informationen miteinander auf Übereinstimmung verglichen werden.

Auch andere "Verschränkungen" der Bildinformation im errechneten Phasenhologramm und der Informationen im gewöhnlichen Volumenreflexionshologramm sind möglich.

Eine Herstellung eines zu verifizierenden Hologrammsicherheitselements kann mit einer Vorrichtung zum Erzeugen von Hologrammsicherheitselementen erfolgen, die umfasst: Eine Berechnungseinheit zum Erfassen von Bildinformationen und Berechnen eines Phasenbilds zu der Bildinformation und Falten des Phasenbilds mit der Abbildungsfunktion mindestens eines optischen Elements zum Erzeugen eines modifizierten Phasenbilds;
eine Transporteinrichtung, die ausgebildet ist, ein als Film ausgebildetes Aufzeichnungsmaterial abschnittsweise in einen Belichtungsbereich zu transportieren und in Kontakt mit einer Auflagefläche in dem Belichtungsbereich zu positionieren;
eine Lichtquelle zum Erzeugen kohärenten Lichts sowie optische Elemente zum Belichten des holografischen Aufzeichnungsmaterials;
und einen angrenzend an den Belichtungsbereich angeordneten phasenmodulierenden räumlichen Lichtmodulator, wobei der phasenmodulierenden räumlichen Lichtmodulator und die Lichtquelle sowie die optischen Elemente so ausgebildet sind, dass das kohärente Licht der Lichtquelle durch das auf der Auflagefläche angeordnete holografische Aufzeichnungsmaterial auf den phasenmodulierenden räumlichen Lichtmodulator trifft, der die räumlichen Phasenlagen des Licht gemäß dem modifizierten Phasenbild moduliert und in das holografische Aufzeichnungsmaterial zurückreflektiert, um mit dem nicht modulierten kohärenten Licht in dem Aufzeichnungsmaterial zu interferieren und ein Hologramm zu speichern.

Der phasenmodulierende räumliche Lichtmodulator kann ein LCOS sein.

Ferner wird eine Verifikationsvorrichtung zum Verifizieren eines Hologrammsicherheitselements geschaffen, das einem Denisjuk-Reflexionshologramm ähnelnd oder gleichend belichtetes computergeneriertes Phasenhologramm umfasst, wobei das computergenerierte Phasenhologramm das mit einer Abbildungsfunktion mindestens eines optischen Elements gefaltete mit der Bildinformation im Fernfeld korrespondierende Phasenbild ist, umfassend:
eine Anordnungsebene zum Anordnen eines zu verifizierenden Hologrammsicherheitselements,
einen Laser zum Beleuchten des Hologrammsicherheitselements mit einer ebenen Welle eines Laserlichts, um in einer Rekonstruktionsebene eine Bildinformation des gespeicherten computergeneriete Phasenhologramms zu projizieren,
wobei die Vorrichtung eine Erfassungseinrichtung zum Erfassen der in die Projektionsebene projizierten Bildinformation umfasst, wobei die Vorrichtung ausgebildet ist, die erfasste Bildinformation mit einer Vorgabe zu vergleichen und eine Verifikationsentscheidung zu fällen und auszugeben.

Um insbesondere die Möglichkeit zu schaffen, Hologrammsicherheitselemente zu verifizieren, die mit verschiedenen Abbildungsfunktionen erzeugt sind und somit die Projektionsebene relativ zum Hologrammsicherheitselement unterschiedlich festlegen, ist bei Ausführungsformen vorgesehen, dass die Erfassungseinrichtung mindestens ein in der Projektionsebene anordenbares Projektionselement umfasst, auf welchem die projizierte Bildinformation zumindest teilweise beim Verifizieren projiziert wird, wobei die das anordenbare Projektionselement an verschiedenen Positionen relativ zu der Anordnungsebene verlagerbar ist, um Hologrammsicherheitselemente verifizieren zu können, die mit voneinander verschiedenen Abbildungsfunktionen erzeugt sind.

Beim Verifizieren wird das anordenbare Projektionselement gemäß dem erwarteten Typ des Hologrammsicherheitselements relativ zur Auflagefläche, auf der das Hologrammsicherheitselement beim Verifizieren angeordnet wird, verlagert. Die Auflagefläche definiert hier dann die Anordnungsebene. Der Typ des Hologrammsicherheitselements kann auf oder in dem Hologrammsicherheitselement oder auf oder in einem Sicherheitselement, in das das Hologrammsicherheitselement integriert ist, in erfassbarer Weise gespeichert sein. Der Typ korreliert mit der verwendeten Abbildungsfunktion.

Ist der Typ unbekannt, d.h. die bei der Erzeugung verwendete Abbildungsfunktion, so kann bei einer Ausführungsform vorgesehen sein, von ein und dasselbe Hologrammsicherheitselement eine Erfassung der Bildinformation in verschiedenen Projektionsebenen, d.h. z.B. mehrere Erfassungen mit dem Projektionselement in verschiedenen Stellungen relativ zur Anordnungsebene auszuführen und auszuwerten.

Das anordenbare Projektionselement kann ein Erfassungselement der Erfassungseinrichtung oder eine Projektionsfläche umfassen. Beispielsweise kann das Erfassungselement ein CCD-Chip sein. Als Projektionselement zum Ausbilden der Projektionsfläche eignet sich beispielsweise ein Schirm, insbesondere ein transparenter Schirm. Die projizierte Bildinformation kann dann beispielsweise mit einer Kamera erfasst werden.

Bei einer Weiterbildung ist vorgesehen, dass mit dem Laserlicht zusätzlich zu dem computergenerierte Phasenhologramms ein Volumenreflexionshologramms rekonstruierbar ist und die rekonstruierte Abbildung mittels einer weiteren Kamera erfassbar ist, und eine Auswerteeinrichtung ausgebildet ist eine Differenzabbildung zu bilden und auszuwerten.

Ferner ist eine Ausführungsform vor, dass die Auswerteeinrichtung ausgebildet ist, das Verifikationsergebnis optisch, akustisch oder als Signal auszugeben.

Bei anderen Ausführungsformen kann die Erfassungseinrichtung fest relativ zu der Anordnungsebene angeordnet sein.

Die Anordnungsebene ist vorzugweise durch ein Anlageelement, beispielsweise eine Halterung oder Ähnliches physisch festgelegt. Diese kann Halteelemente, beispielsweise in Form von Klammern etc., und oder Anlageelemente, z. B. in Form von Kanten, Anschlägen, Aussparungen, Vertiefungen, Führungsstiften etc., umfassen, um eine definierte Positionierung des Hologrammsicherheitselements beim Verifizieren zu ermöglichen und /oder zu gewährleisten.

Die Verifikationsvorrichtung weist ferner vorzugsweise eine Schnittstelle auf, über die das Verifikationsergebnis ausgegeben werden kann. Insbesondere eignen sich Schnittstellen für die standardisierte Kommunikationsprotokolle festgelegt sind.

Zusätzlich und/oder alternativ kann das Verifikationsergebnis visuell und/oder akustisch ausgegeben werden. Hierfür kann die Vorrichtung visuelle und/oder akustische Elemente, wie einen Bildschirm, Leuchten, ein Lautsprecher, Signalklingeln, Signalleuchten etc. umfassen.

Die Schnittstelle und/oder die Ausgabemittel sind vorzugsweise Bestandteil der Auswerteeinrichtung.

Um das zusätzliche Volumenhologramm zu verifizieren und/oder zu rekonstruieren, kann eine gesonderte Lichtquelle vorgesehen sein, die Licht unter einer anderen Richtung und/oder einer anderen Wellenlänge einstrahlt, als das Licht, das zum Verifizieren des in dem Hologrammsicherheitselement gespeicherten computergenerierten Phasenhologramms vorgesehen ist.

Nachfolgend wir die Erfindung unter Bezugnahme auf eine Zeichnung näher erläutert. Hierbei zeigen:
- Fig. 1: eine schematische Ansicht einer Vorrichtung zur Herstellung eines individualisierten Volumenreflexionshologramms nach dem Stand der Technik;
- Fig. 2: eine schematische Darstellung einer Vorrichtung zur Herstellung eines für eine maschinelle Verifikation geeigneten individualisierten Hologrammsicherheitselements;
- Fig. 3: ein schematisches Ablaufdiagramm des Verfahrens zum Herstellen eines maschinenlesbaren individualisierten Hologrammsicherheitselements;
- Fig. 4: eine schematische Darstellung einer Vorrichtung zum Herstellen eines Hologrammsicherheitselements, das zusätzlich ein gewöhnliches Volumenreflexionshologramm mit einer zweiten Bildinformation umfasst; und
- Fig. 5: ein schematisches Diagramm zum Veranschaulichen der Verifikation eines Hologrammsicherheitselements.

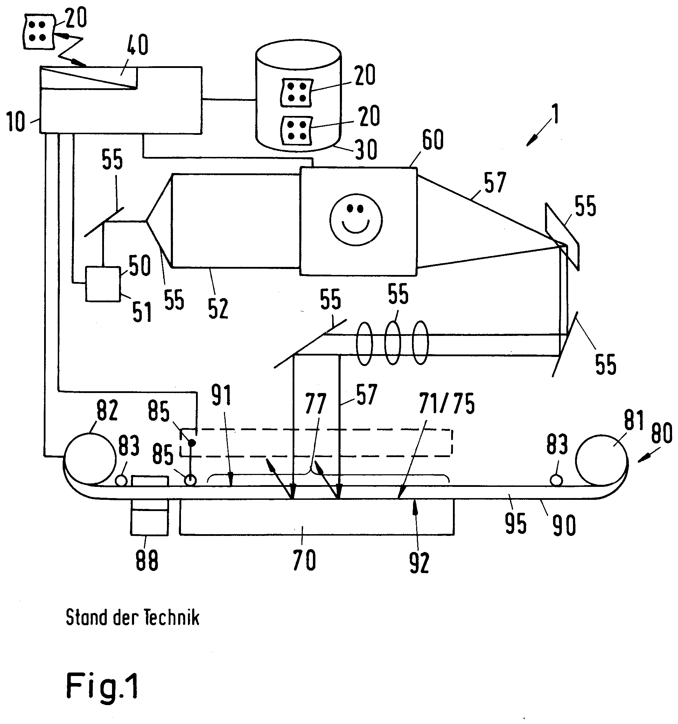

In Fig. 1 ist schematisch eine Vorrichtung 1 zum Herstellen eines Volumenreflexionshologramms nach dem Stand der Technik dargestellt. Die Vorrichtung 1 umfasst eine Steuereinrichtung 10, die ausgebildet ist, individuelle Bildinformationen 20 zu erfassen. Diese können beispielsweise aus einer Speichereinrichtung 30 oder über eine Schnittstelle 40 erfasst werden.

Die Steuereinrichtung 10 ist mit einer Transporteinrichtung 80 gekoppelt. Diese umfasst eine Materialspule 81 und eine Aufwickelspule 82. Auf der Materialspule 81 wird ein holografischer Film 90 bereitgestellt, der ein holografisches Aufzeichnungsmaterial 95 umfasst. Das holografische Aufzeichnungsmaterial 95 umfasst vorzugweise ein Fotopolymer. Das von der Materialspule 81 bereitgestellte holografische Aufzeichnungsmaterial 95 ist über Umlenkrollen 83 zu der Aufwickelspule 82 geführt. Die Transportvorrichtung bewegt den holografischen Film 90 abschnittsweise in einen Belichtungsbereich 77.

In dem Belichtungsbereich 77 ist unterhalb des holografischen Films 90 ein Hologrammmaster 70 angeordnet. Eine Oberseite 71 des Hologrammmasters 70 bildet eine Auflagefläche 75. Die Transporteinrichtung 80 ist ausgebildet, den holografischen Film 90 abschnittsweise in den Belichtungsbereich 77 so zu bewegen, sodass der holografische Film 90 an der Auflagefläche 75 des Hologrammmasters 70 mit dessen Unterseite 92 anliegt. Hierfür ist in der gezeigten Ausführungsform eine Anpressrollvorrichtung 85 vorgesehen, die über eine Oberseite 91 des Hologrammfilms rollend bewegt wird und den Hologrammfilm gegen die Auflagefläche 75 des Hologrammmasters 70 anpresst.

Mit der Steuereinrichtung 10 ist ferner eine Lichtquelle 50 gekoppelt, die vorzugsweise als Laser 51 ausgebildet ist. Das von dem Laser 51 erzeugte kohärente Licht 52 wird über Optikelemente 55 zunächst auf einen amplitudenmodulierenden räumlichen Lichtmodulator 60 geführt. Dieser wird von der Steuereinrichtung 10 so angesteuert, dass das aus dem räumlichen Lichtmodulator 60 austretende Licht örtlich hinsichtlich seiner Amplitude oder Lichtintensität gemäß der erfassten individuellen Bildinformation 20 moduliert ist. Das so amplitudenmodulierte Licht wird über die weiteren Optikelemente 55 beispielsweise senkrecht durch den holografischen Film 90 mit dem holografischen Aufzeichnungsmaterial 95 auf den darunter befindlichen Hologrammmaster 70 geführt. An diesen wird das amplitudenmodulierte kohärente Licht 57 reflektierend gebeugt. Der Hologrammmaster 70 ist hierbei beispielsweise als Volumenreflexionshologramm einer homogenen streuenden Mattscheibe ausgebildet. Aufgrund der Amplitudenmodulation des kohärenten Lichts 57 wird diese homogen reflektierende Mattscheibe lokal mit unterschiedlichen Intensitäten bzw. Beugungseffizienten in das holografische Aufzeichnungsmaterial als Volumenreflexionshologramm kopiert. Das angewendete Verfahren entspricht dem Denisjuk-Holografieverfahren. Nachdem ein individualisiertes Hologramm belichtet ist, wird der beschriebene Vorgang mit neuen individualisierenden Bildinformationen 20 fortgesetzt.

Zwischen dem Belichtungsbereich 77 und der Aufwickelspule 82 kann eine Fixierstation 88 angeordnet sein, die dafür sorgt, dass nicht belichtete Fotopolymerbereiche im holografischen Aufzeichnungsmaterial 95 ihre Reaktionsfähigkeit gegenüber Licht verlieren und die durch die Belichtung eingeleiteten Polymerisationsvorgänge beendet werden.

Es versteht sich für den Fachmann, dass hier einzelne Verfahrensschritte stark vereinfacht beschrieben sind. Beispielsweise kann der holografische Film an der Auflageplatte mittels Erzeugens eines Unterdrucks angesaugt und vor dem Weitertransport über Einblasen eines Fluids von der Auflagefläche getrennt werden, um beim Transport Beschädigungen des Hologrammfilms 90 zu verhindern.

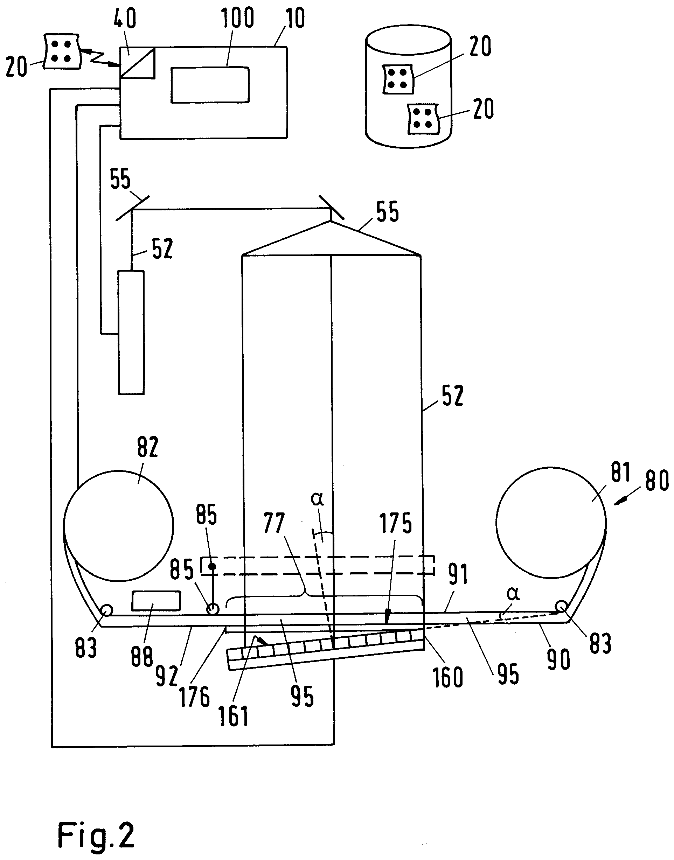

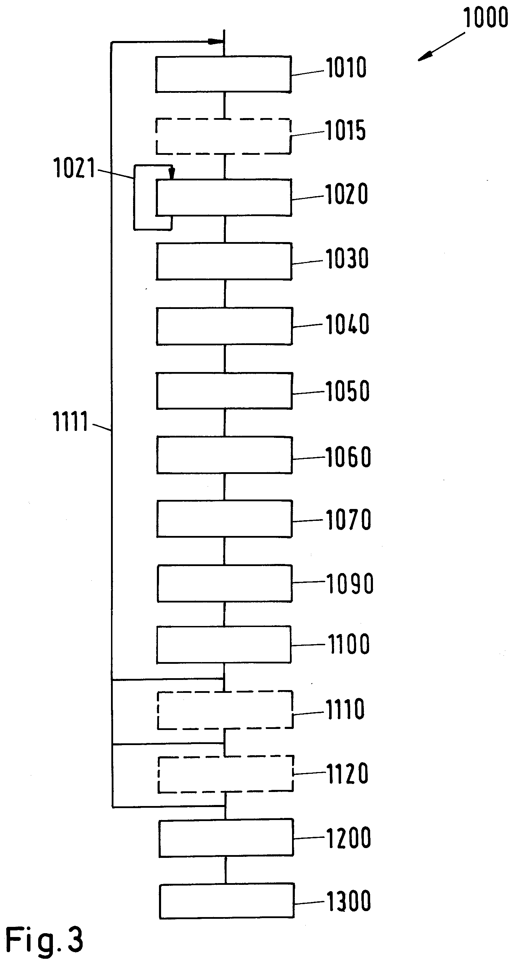

In Fig. 2 ist eine Vorrichtung 1' zum Erzeugen von Hologrammsicherheitselementen, wie sie hier vorgeschlagen werden, schematisch dargestellt. Gleiche technische Merkmale, wie sie aus der Vorrichtung 1 nach dem Stand der Technik bekannt sind, sind mit den gleichen Bezugszeichen versehen und, sofern sie derselben Funktionen dienen, hier nicht erneut explizit beschrieben. Gleichzeitig wird das Verfahren zur Herstellung anhand eines Ablaufdiagramms nach Fig. 3 beschrieben.

Die Steuereinrichtung 10 umfasst eine Berechnungseinheit 100. Die Berechnungseinheit 100 erfasst 1010 die individuellen Bildinformationen 20, beispielsweise als Bitmap. Alternativ kann die Berechnungseinheit 100 ausgebildet sein, die bereitgestellten Bildinformationen 20 in eine Bitmap umzuwandeln 1015. Grundsätzlich ist es möglich, dass die Bildinformationen 20 auch abstrakt bereitgestellt werden, beispielsweise als alphanumerische Zeichen, die dann unter Ausnutzung eines Fonts in eine entsprechende Bitmap umgewandelt werden, die die alphanumerischen Zeichen grafisch darstellt.

Die Berechnungseinheit 100 errechnet aus den bereitgestellten Bildinformationen ein Phasenbild 1020. Ein solches Phasenbild enthält die örtlichen Phaseninformationen, die einem Lichtfeld aufzuprägen sind, damit dieses im Fernfeld die mit dem Phasenbild korrelierte grafische Bildinformation projiziert. Ein solches Phasenbild kann in einem iterativen Fouriertransformationsprozess beispielsweise nach dem Gerchberg-Saxton-Algorithmus approximiert werden. Der Algorithmus wurde von Gerchgerg und Saxton erstmals in dem Artikel: Gerchberg, R. W.; Saxton, W. O. (1972). "A practical algorithm for the determination of the phase from image and diffraction plane pictures", Optik. 35: 237-246 beschrieben. Im Stand der Technik sind eine Reihe Weiterentwicklungen bekannt. Eine wird beispielsweise von P. Memmolo et al. im Artikel vom 1. Januar 2014 "Investigation on specific solutions of Gerchberg-Saxton algorithm", Optics and Lasers in Engineering, 52: 206-211 beschrieben. Mittels eines Pfeils 1021 ist der iterative Prozess angedeutet.

Um eine definierte Projektionsebene für die Rekonstruktion des herzustellenden Hologrammsicherheitselements zu erhalten, wird das erhaltene Phasenbild mit einer Abbildungsfunktion eines optischen Elements gefaltet 1030. Man erhält ein modifiziertes Phasenbild. Vorzugsweise wird die Abbildungsfunktion eine Bessel-Linse verwendet.

Von der Transportvorrichtung 80 wird ein Abschnitt des Hologrammfilms 90 mit dem Aufzeichnungsmaterial 95 in einen Belichtungsbereich 77 transportiert 1040 und dort anliegend an eine Auflagefläche 175 angedrückt 1050.

Das Anlegen an eine mechanisch ausgebildete Auflagefläche 175 dient dem Vermeiden von Bewegungen des holografischen Aufzeichnungsmaterials 95 während einer Belichtung. Bei einer Ausführungsform kann die Auflagefläche 175 mittels einer dünnen transparenten Glas- oder Kunststoffscheibe 176 realisiert sein. Bei anderen Ausführungsformen kann dies auch die Oberfläche eines phasenmodulierenden räumlichen Lichtmodulators 160 sein, der auch als räumlichen Phasenmodulator 160 bezeichnet wird. Bei der dargestellten Ausführungsform sind die Auflagefläche 175 und der räumliche Phasenmodulator 160 getrennt voneinander ausgebildet und eine Oberfläche 161 des räumlichen Phasenmodulators 160 leicht gegenüber der Auflagefläche 175, beispielsweise um einen Winkel α, verkippt.

Von einer Lichtquelle 50, die als Laser 51 ausgebildet ist, wird kohärentes ebenes Licht erzeugt 1060. Das Licht wird mit Optikelementen 55 vorzugsweise senkrecht auf das holografische Aufzeichnungsmaterial 95 in dem holografischen Film 90 eingestrahlt 1070.

Die Steuereinrichtung 10 steuert den räumlichen Phasenmodulator 160 gemäß dem berechneten modifizierten Phasenbild als Phasenhologramm an. Bei dem räumlichen Phasenmodulator 160 handelt es sich vorzugsweise um ein LCOS, ein sogenanntes Liquid Crystal on Silicon Bauelement, bei dem Flüssigkristallzellen auf einen CMOS-Chip ausgebildet sind, über den die unterschiedlichen Ausrichtungen des Flüssigkristalls in den einzelnen Zellen gesteuert wird. Je nach Ausrichtung der Flüssigkristallmoleküle ändert sich lokal deren Brechungsindex und die hiermit verknüpfte Ausbreitungsgeschwindigkeit des Lichts. An der Siliziumoberfläche wird das Licht reflektiert. Durch die lokal unterschiedlichen Ausbreitungsgeschwindigkeit ändert sich die Phasenlage des elektrischen Felds des reflektierten Lichts lokal unterschiedlich. Einer einfallenden ebenen Welle werden somit die Phaseninformationen des Phasenhologramms, d.h. hier des modifizierten Phasenbilds, aufgeprägt. Bei diesem Prozess wird somit das einfallende Licht phasenmoduliert 1090. Das reflektierte lokal unterschiedlich phasenmodulierte Licht tritt erneut durch die Auflagefläche 175 in das holografische Aufzeichnungsmaterial 95 des holografischen Films 90 und interferiert dort mit dem eingestrahlten nichtmodulierten Licht 1100. Diese Interferenzinformation wird als Hologramm in dem holografischen Aufzeichnungsmaterial gespeichert. Dieses wird auch als Belichten des Phasenhologramms in das holografische Aufzeichnungsmaterial bezeichnet 1100. Entweder unmittelbar oder nach der Belichtung des gesamten Hologrammfilms wird dieser (je nach Aufzeichnungsmaterial) entwickelt 1110 und/oder gegebenenfalls noch fixiert 1120. Nach einem der Verfahrensschritte 1100, 1110, 1120 verzweigt das Verfahren und beginnt erneut mit dem Verfahrensschritt 1000 Erfassen einer Bildinformation, bis der gesamte Hologrammfilm mit verschiedenen Hologrammsicherheitselementen ausgebildet ist. Hierdurch können auf einfache Weise eine Vielzahl individualisierter Phasenhologramme als Hologrammsicherheitselemente erzeugt werden, was durch die Iteration 1111 angedeutet ist.

Wenn der Hologrammfilm 90 vollständig belichtet ist, werden die einzelnen Hologrammsicherheitselemente, wie oben bereits angegeben, gegebenenfalls noch entwickelt 1110 und/oder fixiert 1120 und dann aus dem Hologrammfilm vereinzelt 1200 und weiterverarbeitet, beispielsweise in ein Sicherheitsdokument als eine Dokumentschicht einlaminiert oder aufkaschiert 1300.

Bei einer Weiterbildung kann zeitgleich oder zeitversetzt auch die Einbelichtung eines "gewöhnlichen" Volumenreflexionshologramms in denselben Hologrammfilm erfolgen, bei welcher beispielsweise eine homogen leuchtende Streuscheibe als Hologrammmaster genutzt wird, die mit räumlich amplitudenmoduliertem Licht belichtet wird, um diese Streuscheibe individualisiert in den Hologrammfilm zu kopieren. Ein Aufzeichnungsbereich des Phasenhologramms und ein weiterer Aufzeichnungsbereich für das gewöhnliche Volumenreflexionshologramm sind hierbei vorzugsweise nebeneinander und disjunkt ausgebildet. Hierdurch kann für beide Hologramme eine maximal mögliche Beugungseffizienz erreicht werden. Die beiden Hologramme können mit derselben Wellenlänge belichtet werden. Andere Ausführungsformen können unterschiedliche Wellenlängen für deren Belichtung vorsehen.

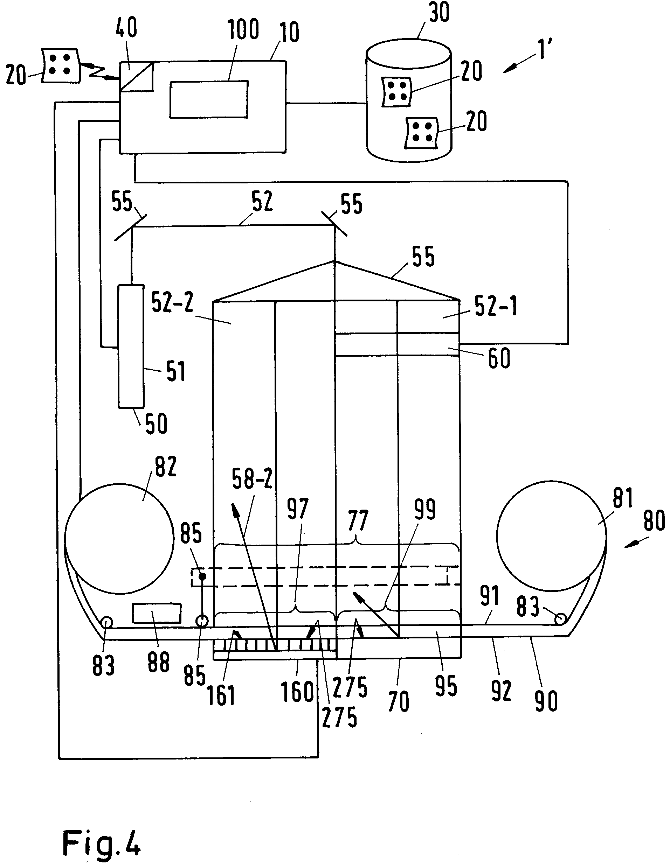

Eine solche Ausführungsform, bei der beide Hologramme mit derselben Wellenlänge erzeugt werden, ist schematisch in Fig. 4 dargestellt. Gleiche technische Merkmale wie in den Figuren 1 und 2 sind erneut mit denselben Bezugszeichen versehen. Bei dieser Ausführungsform bilden der Hologrammmaster 70 und der räumliche Phasenmodulator 160 gemeinsam die Auflagefläche 275 für den Hologrammfilm 90 während des Belichtens des mittels Amplitudenmodulation individualisierten Volumenreflexionshologramms und des Phasenhologramms.

Das von derselben Lichtquelle 50, die als Laser 51 ausgebildet ist, erzeugte Licht 52 wird aufgeweitet und ein Teil 52-1 hiervon, der zum Belichten des Hologrammmasters 70 verwendet wird, mittels des amplitudenmodulierenden räumlichen Lichtmodulators 60 mit einer zweiten individualisierenden Bildinformation angesteuert und die entsprechende zweite Bildinformation als Volumenreflexionshologramm in den Hologrammfilm und dessen Aufzeichnungsmaterial in einen weiteren Aufzeichnungsbereich 99 einbelichtet. Ein anderer Teil 52-2 des kohärenten Lichts fällt als ebene Welle senkrecht durch den Hologrammfilm 90 auf den darunter befindlichen phasenmodulierenden räumlichen Phasenmodulator 160, der dem reflektierten Licht 58-2 die Phaseninformation des Phasenhologramms aufprägt. Dieses Phasenhologramm oder modifizierte Phasenbild wird ebenfalls als Volumenreflexionshologramm in dem holografischen Aufzeichnungsmedium in einem Aufzeichnungsbereich 97 gespeichert. Die Bildinformation, die mit dem Phasenhologramm korreliert ist, ist eine erste individualisierende Bildinformation, die vorzugsweise mit der zweiten individualisierenden Bildinformation des gewöhnlichen Volumenreflexionshologramms verknüpft ist. Beispielsweise kann es sich um ergänzende Informationen handeln. Bei anderen Ausführungsformen sind die Informationen identisch, was einen einfachen Vergleich der rekonstruierten Hologramme bei der Verifikation ermöglicht.

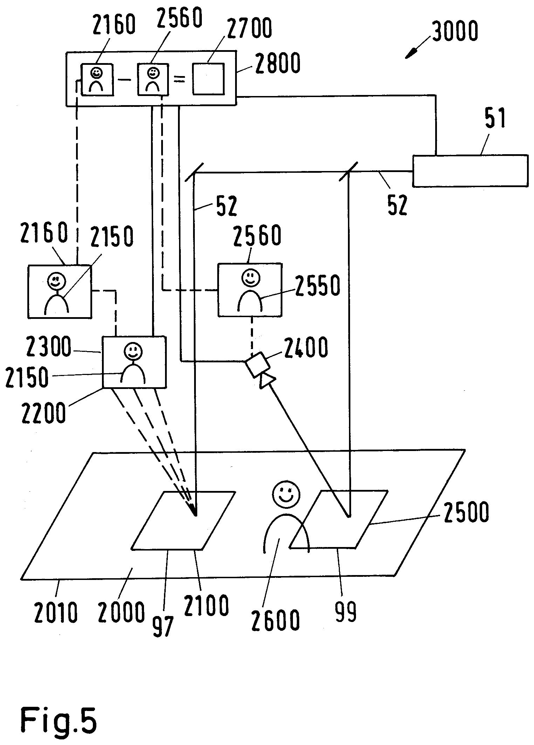

In Fig. 5 ist schematisch die Verifikationsvorrichtung 3000 eines Hologrammsicherheitselement 2000 einer Gesamtheit von Hologrammsicherheitselementen mit individualisierten Phasenhologrammen dargestellt. Das Hologrammsicherheitselement 2000 ist in ein Sicherheitsdokuments 2010, beispielsweise als eine Schicht integriert. Das Sicherheitsdokument 2010 selbst ist im Sinne der hier verwendeten Definition ebenfalls ein Hologrammsicherheitselement. Das Sicherheitsdokument ist auf einer Anordnungsebene 2050 angeordnet. Das Hologrammsicherheitselement 2000 wird mit kohärentem Laserlicht 52 eines Lasers 51 beleuchtet. Der ebenen Welle des Laserlichts 52 wird in dem Aufzeichnungsbereich 97 des Phasenhologramms 2100 des Hologrammsicherheitselements 2000 beim Beugen die Phaseninformation des Phasenhologramms 2100 aufgeprägt. In einer vorgegebenen Rekonstruktionsebene 2200, die beispielsweise durch eine Brennweite f verwendeten der Abbildungsfunktion einer Bessel-Linse festgelegt ist, wird die Bildinformation 2150 des Phasenhologramms 2100 projiziert. Dieses ist die Bildinformation, die mit dem Phasenbild korreliert ist, das mit der Abbildungsfunktion der Bessel-Linse gefaltet wurde, um das modifizierte Phasenbild des gespeicherten Phasenhologramms 2100 zu erzeugen. Auf einer Rekonstruktionsebene 2200 im Abstand dieser Brennweite f wird somit bei der Verifikation und Rekonstruktion des Phasenhologramms 2100 die darin kodierte Bildinformation 2150 projiziert. Diese kann beispielsweise unmittelbar mit einem CCD-Chip 2350 in der Rekonstruktionsebene 2200 als Rekonstruktionsabbildung 2160 erfasst werden. Andernfalls kann die in die Rekonstruktionsebene 2200 projizierte Bildinformation 2150 mittels einer Kamera erfasst werden. Diese Bildinformation 2150 wird, um eine Verifikationsentscheidung zu fällen, mit einer Vorgabe verglichen. Dieses kann beispielsweise aus einer Abbildung einer in ein Sicherheitsdokument gedruckten Information, beispielsweise einem bedruckten Portraitbild 2600, bestehen.

Bei der dargestellten Ausführungsform wird die Vorgabeinformation aus einem Volumenreflexionshologramm 2500 durch dessen Rekonstruktion extrahiert, welches in demselben Aufzeichnungsmaterial, jedoch in einem vorzugsweise räumlich versetzten weiteren Aufzeichnungsbereich 99 gespeichert ist. Dieses ist in Fig. 5 ebenfalls angedeutet. Bei einer Ausführungsform enthält das Phasenhologramm eine Bildinformation 2150, die der Bildinformation 2550 des gewöhnlichen Volumenreflexionshologramms 2500 gleicht. Die von dem Volumenreflexionshologramm bei der Rekonstruktion erfasste Abbildung 2560 kann somit der bei der Rekonstruktion des Phasenhologramms erfassten Rekonstruktionsabbildung 2160 beispielsweise subtrahierend überlagert werden, wodurch Abweichungen in den rekonstruierten Bildinformationen in einer sich ergebenden Differenzabbildung 2700 einfach erkannt werden können. Ist eine Übereinstimmung vorhanden, so ist die Differenzabbildung 2700 "leer" und wird das Hologrammsicherheitselement 2000 als echt verifiziert, andernfalls als nicht echt oder beschädigt. Diese Entscheidung wird auf das Sicherheitsdokument 2010 übertragen. Die Beleuchtung mit dem kohärenten Licht 52 des Lasers 51 und das Erfassen der Rekonstruktionsabbildung 2160 mit dem CCD-Chip 2350 und der Abbildung 2560 des rekonstruierten Volumenreflexionshologramms 2500 mittels einer Kamera 2400 sowie die Bildung der Differenzabbildung 2700 und deren Auswertung werden durch eine Auswerteeinrichtung 2800 gesteuert und/oder vorgenommen. Diese gibt das Verifikationsergebnis optisch, akustisch oder als Signal aus.

Es hat sich ferner überraschenderweise gezeigt, dass bei der Rekonstruktion mit Weißlicht und zwar nur bei Weißlicht in der Ebene des Hologrammsicherheitselements der Informationsgehalt des Phasenhologramms auch, wenn auch klein, als "gewöhnliches" Volumenreflexionshologramm rekonstruiert und erfassbar ist. Das Vorhandensein dieses Merkmals kann zusätzlich zur Verifikation genutzt werden.

Es versteht sich für den Fachmann, dass hier lediglich beispielhafte Ausführungsformen beschrieben sind. Die in den verschiedenen Ausführungsformen beschriebenen Merkmale können miteinander kombiniert werden, um weitere Ausführungsformen der Erfindung zu realisieren. Insbesondere können in das holografische Aufzeichnungsmaterial, in das das Phasenhologramm belichtet wird, weitere Beugungselemente mit Licht derselben Wellenlänge oder einer anderen Wellenlänge zeitgleich oder zeitversetzt einbelichtet werden. Das Hologrammsicherheitselement mit dem Phasenhologramm kann auf verschiedene Weise in Sicherheitsdokumente integriert werden. Vorzugsweise wird dies als vollflächige Schicht auf ein Dokumentkörper aufgebracht oder in diesen integriert, der aus mehreren Lagen, vorzugsweise aus Kunststoffmaterial, gebildet ist, die miteinander in einem Laminationsverfahren zu einem Dokumentkörper verbunden werden. Dies erfolgt vorzugsweise unter Zuführung von Wärme unter Anwendung von Druck. Die einzelnen Substratschichten können eine Reihe weiterer Sicherheitselemente und Sicherheitsmerkmale umfassen.

### Bezugszeichenliste

- 1, 1': Vorrichtung zum Herstellen eines holografischen Sicherheitselements
- 10: Steuereinrichtung
- 20: individuelle Bildinformation
- 30: Speichereinrichtung
- 40: Schnittstelle
- 50: Lichtquelle
- 51: Laser
- 52: kohärentes Licht
- 52-1: ein Teil des kohärenten Lichts
- 52-2: anderer Teil des kohärenten Lichts
- 55: optische Elemente
- 57: amplitudenmoduliertes Licht
- 58-2: reflektiertes phasenmoduliertes Licht
- 60: amplitudenmodulierender räumlicher Lichtmodulator
- 70: Hologrammmaster
- 71: Oberseite
- 75: Auflagefläche
- 77: Belichtungsbereich/Aufzeichnungsbereich
- 80: Transporteinrichtung
- 81: Materialspule
- 82: Aufwickelspule
- 83: Umlenkrollen
- 85: Anpressrollvorrichtung
- 90: Hologrammfilm
- 91: Oberseite
- 92: Unterseite
- 95: holografisches Aufzeichnungsmaterial
- 97: Aufzeichnungsbereich
- 99: weiterer Aufzeichnungsbereich
- 100: Berechnungseinheit
- 160: räumlicher Phasenmodulator
- 175: Auflagefläche
- 176: Gals-/Kunststoffscheibe
- α: Winkel Oberseite Hologrammfilm -Oberseite Phasenmodulator
- 1000: Verfahren zum Herstellen eines Hologrammsicherheitselements
- 1010: Erfassen einer Bildinformation
- 1015: Erzeugen einer Bitmap
- 1020: Errechnen eines Phasenbilds
- 1021: Iteration
- 1030: Falten des Phasenbilds mit einer Abbildungsfunktion eines optischen Elements
- 1040: Transportieren eines Abschnitts des Hologrammfilms
- 1050: Auflegen des Hologrammfilms an einer Auflagefläche
- 1060: Erzeugen kohärenten Lichts
- 1070: Durchstrahlen des holografischen Aufzeichnungsmaterials
- 1080: Ansteuern des räumlichen Phasenmodulators gemäß des errechneten Phasenhologramms
- 1090: Phasenmodulieren des kohärenten Lichts und Reflektieren des Lichts
- 1090: Durchstrahlen des holografischen Aufzeichnungsmaterials mit dem phasenmodulierten Licht
- 1100: Interferieren des phasenmodulierten und nichtmodulierten Lichts Belichten des Phasenhologramms
- 1111: Iteration
- 1110: Entwickeln des holografischen Aufzeichnungsmaterials
- 1120: Fixieren des holografischen Aufzeichnungsmaterials
- 1200: Vereinzeln
- 1300: Einlaminieren in/Aufkaschieren auf ein Sicherheitsdokument
- 2000: Hologrammsicherheitselement
- 2010: Sicherheitsdokument
- 2050: Anordnungsebene
- 2100: Phasenhologramm
- 2150: Bildinformation
- 2160: Rekonstruktionsabbildung
- 2200: Rekonstruktionsebene
- 2350: CCD-Chip
- 2400: Kamera
- 2500: Volumenreflexionshologramm
- 2550: Bildinformation des Volumenreflexionshologramms
- 2560: Abbildung
- 2600: gedrucktes Portraitbild
- 2700: Differenzabbildung
- 2800: Auswerteeinrichtung
- 3000: Verifikationsvorrichtung

## Patentansprüche

1. Verfahren (1000) zum Herstellen eines Hologrammsicherheitselements (2000) umfassend die Schritte:
Erfassen (1010) einer Bildinformation;
Errechnen (1020) eines Phasenbilds, das mit der Bildinformation im Fernfeld korrespondiert;
Falten (1030) des Phasenbilds mit einer Abbildungsfunktion mindestens eines optischen Elements zum Erzeugen eines modifizierten Phasenbilds, um die Bildinformation des Fernfelds eine anderen Wiedergabeposition zuzuweisen;
Anordnen eines holografischen Aufzeichnungsmaterials vor einem reflektierenden phasenmodulierenden räumlichen Lichtmodulator, sodass eine Seite des holografischen Aufzeichnungsmaterials dem phasenmodulierenden räumlichen Lichtmodulator zugewandt ist,
Ansteuern (1080) eines phasenmodulierenden räumlichen Lichtmodulators gemäß dem modifizierten Phasenbild, sodass der phasenmodulierende räumliche Lichtmodulator einfallendes kohärentes Licht gemäß den Phaseninformationen des modifizierten Phasenbilds räumlich moduliert,
Belichten des Aufzeichnungsmaterials mit kohärentem Licht von der dem phasenmodulierenden räumlichen Lichtmodulator abgewandten Seite, so dass das kohärente von der dem phasenmodulierenden räumlichen Lichtmodulator abgewandten Seite eingestrahlte Licht in dem holografischen Aufzeichnungsmaterial mit dem hinsichtlich der Phase modulierten von dem reflektierenden räumlichen Phasenmodulator reflektierten Licht interferiert, um ein Hologramm in dem Aufzeichnungsmaterial zu speichern (1100).

2. Verfahren (1000) nach Anspruch 1, **dadurch gekennzeichnet, dass** eine Vielzahl von Hologrammsicherheitselementen hergestellt wird und für jedes der Hologrammsicherheitselemente eine individuelle Bildinformation erfasst wird.

3. Verfahren (1000) nach Anspruch 1 oder 2, **dadurch gekennzeichnet, dass** das Falten (1030) des Phasenbilds mit einer Abbildungsfunktion mindestens eines optischen Elements, das Falten (1030) des errechneten Phasenbilds mit einer Bessel-Linsen-Abbildungsfunktion umfasst, die eine Abbildung in einer vorgegebenen Brennweite f bewirkt.

4. Verfahren (1000) nach einem der vorangehenden Ansprüche, **dadurch gekennzeichnet, dass** das Falten (1030) des Phasenbilds mit einer Abbildungsfunktion mindestens eines optischen Elements das Falten mit einer Blazegitter-Struktur umfasst, die eine Auslenkung der rekonstruierten Bildinformation gegenüber einer Normale des Films in einer Richtung bewirkt.

5. Verfahren (1000) nach einem der vorangehenden Ansprüche, **dadurch gekennzeichnet, dass** die Belichtung mit dem kohärenten Licht senkrecht zur Auflagefläche des Aufzeichnungsmaterials vorgenommen wird.

6. Verfahren (1000) nach einem der vorangehenden Ansprüche, **dadurch gekennzeichnet, dass** der phasenmodulierende räumliche Lichtmodulator (160) das phasenmodulierte Licht leicht verkippt gegenüber einer Oberflächennormale des holografischen Aufzeichnungsmaterials reflektiert.

7. Verfahren (1000) nach einem der vorangehenden Ansprüche, **dadurch gekennzeichnet, dass** das Phasenbild mittels eines iterativen Fouriertransformationsprozesses aus der Bildinformation bestimmt wird.

8. Vorrichtung (1) zum Erzeugen von Hologrammsicherheitselementen (2000), umfassend:
Berechnungseinrichtung (100) zum Erfassen von Bildinformationen (20) und Berechnen eines Phasenbilds zu der Bildinformation und Falten des Phasenbilds mit der Abbildungsfunktion mindestens eines optischen Elements zum Erzeugen eines modifizierten Phasenbilds;
ein Transproteinrichtung (80), die ausgebildet ist, ein als Film (90) ausgebildetes Aufzeichnungsmaterial (95) abschnittsweise in einen Belichtungsbereich (77) zu transportieren und in Kontakt mit einer Auflagefläche (175) in dem Belichtungsbereich (77) zu positionieren;
eine Lichtquelle (30) zum Erzeugen kohärenten Lichts (52) sowie optische Elemente (55) zum Belichten des holografischen Aufzeichnungsmaterials (95);
und einen angrenzend an den Belichtungsbereich (77) angeordneten phasenmodulierenden räumlichen Lichtmodulator (160), wobei der phasenmodulierenden räumlichen Lichtmodulator (160) und die Lichtquelle (50) sowie eine optischen Elemente (55) so ausgebildet sind, dass das kohärente Licht der Lichtquelle (50) durch das auf der Auflagefläche (175) angeordnete holografische Aufzeichnungsmaterial (95) auf den phasenmodulierenden räumlichen Lichtmodulator (160) trifft, der die räumlichen Phasenlagen des Licht gemäß dem modifizierten Phasenbild moduliert und in das holografische Aufzeichnungsmaterial (95) zurückreflektiert, um mit dem nicht modulierten kohärenten Licht in dem Aufzeichnungsmaterial (95) zu interferieren und ein Hologramm zu speichern..

9. Vorrichtung (1') nach Anspruch 8, **dadurch gekennzeichnet, dass** der phasenmodulierende räumlichen Lichtmodulator (160) eine LCOS ist.

10. Verfahren zum Verifizieren eines Hologrammsicherheitselements, Einstahlen von kohärentem Licht auf das Hologrammsicherheitselement (2000) und Projizieren des an dem Hologrammsicherheitselement gebeugten Lichts auf eine Rekonstruktionseben, Erfassen einer auf die Rekonstruktionsebene projizierten Bildinformation (2150) und Auswerten der Bildinformationen (2150) gegenüber einer Vorgabe, Ausgeben einer Verifikationsentscheidung abhängig von dem Vergleich mit der Vorgabe.

11. Verfahren nach Anspruch 10, **dadurch gekennzeichnet, dass** die Vorgabe erfasst wird, indem in dem Hologrammsicherheitselement (2000) zusätzlich gespeichertes Volumenreflexionshologramm (2500) rekonstruiert und als die Vorgabe erfasst wird.

12. Verifikationsvorrichtung zum Verifizieren eines Hologrammsicherheitselements, das ein einem Denisjuk-Reflexionshologramm ähnelnd oder gleichend belichtetes computergeneriertes Phasenhologramm umfasst, wobei das computergenerierte Phasenhologramm das mit einer Abbildungsfunktion mindestens eines optischen Elements gefaltete mit der Bildinformation im Fernfeld korrespondierende Phasenbild ist, umfassend:
eine Anordnungsebene (2050) zum Anordnen eines zu verifizierenden Hologrammsicherheitselements (2000),
einen Laser zum Beleuchten des Hologrammsicherheitselements (2000) mit einer ebenen Welle eines Laserlichts (52), um in einer Rekonstruktionsebene eine Bildinformation des gespeicherten computergeneriete Phasenhologramms (2100) zu projizieren,
wobei die Vorrichtung eine Erfassungseinrichtung zum Erfassen der in die Projektionsebene projizierten Bildinformation umfasst, wobei die Vorrichtung ausgebildet ist, die erfasste Bildinformation mit einer Vorgabe zu vergleichen und eine Verifikationsentscheidung zu fällen und auszugeben.

13. Verifikationsvorrichtung nach Anspruch 12, **dadurch gekennzeichnet, dass** die Erfassungseinrichtung mindestens ein in der Projektionsebene anordenbares Projektionselement umfasst, auf welchem die projizierte Bildinformation zumindest teilweise beim Verifizieren projiziert wird, wobei die das anordenbare Projektionselement an verschiedenen Positionen relativ zu der Anordnungsebene verlagerbar ist, um Hologrammsicherheitselemente verifizieren zu können, die mit voneinander verschiedenen Abbildungsfunktionen erzeugt sind.

14. Verifikationsvorrichtung nach Anspruch 13, **dadurch gekennzeichnet, dass** das anordenbare Projektionselement ein Erfassungselement der Erfassungseinrichtung oder eine Projektionsfläche umfasst.

15. Verifikationsvorrichtung nach einem der Ansprüche 12 bis14, **dadurch gekennzeichnet, dass** mit dem Laserlicht (52) zusätzlich zu dem computergeneriete Phasenhologramms (2100) ein Volumenreflexionshologramms (2500) rekonstruierbar ist und die rekonstruierte Abbildung (2560) mittels einer weiteren Erfassungseinrichtung, insbesondere einer Kamera (2400), erfassbar ist, und eine Auswerteeinrichtung (2800) ausgebildet ist eine Differenzabbildung zu bilden und auszuwerten.
